# EUROPÄISCHE PATENTSCHRIFT

(11) **EP 0 972 600 B1**
(45) Veröffentlichungstag und Bekanntmachung des Hinweises auf die Patenterteilung: **11.09.2002**
(21) Anmeldenummer: 99810593.6
(22) Anmeldetag: 06.07.1999
(51) Int. Cl.: B23D 33/02, B26F 1/38, B23D 15/06, B23D 27/00, B21D 43/28

(54) **Vorrichtung zum rechnergesteuerten Formschneiden von Blechen**
Apparatus for CNC-cutting of sheets
Dispositif pour couper des plaques métalliques en utilisant un ordinateur

(30) Priorität: 13.07.1998 CH 150898
(43) Veröffentlichungstag der Anmeldung: 19.01.2000
(73) Patentinhaber: MABI AG, 5106 Veltheim (CH)
(72) Erfinder: Biland, Max, 5106 Veltheim (CH)
(74) Vertreter: Groner, Manfred

(56) Entgegenhaltungen:
- EP-A- 0 482 702
- DE-A- 2 717 508
- DE-A- 2 913 747
- US-A- 4 364 554

## Beschreibung

Die Erfindung betrifft eine Vorrichtung zum rechnergesteuerten Formschneiden von Blechen, mit einem Maschinengestell, an dem ein Schneidwerkzeug mit einem um eine vertikale Achse schwenkbaren Schneidmesserkopf, mit Zumindest einem Schneidmesser, in einer horizontalen Richtung mit einem ersten Antrieb verfahrbar ist und mit einer Blechtransporteinrichtung, die einen zweiten Antrieb und Führungsmittel aufweist, mit denen eine Blechtafel in horizontaler Richtung gesteuert verfahrbar ist.

Eine Vorrichtung dieser Art ist aus der EP 0 620 072 Al des Anmelders bekannt geworden. Bei diesem wird durch koordinierte Bewegung von Blech und Schneidwerkzeug eine gewünschte Form geschnitten. Das Blech wird in einer horizontalen Richtung mittels einer an Rollen gelagerten Transportschiene bewegt. Eine Schwierigkeit bei solchen Vorrichtungen ist die Stabilisierung des Bleches während des Schneidvorgangs. Der Erfindung liegt die Aufgabe zugrunde, eine Vorrichtung der genannten Art zu schaffen, bei welcher die genannte Schwierigkeit vermieden ist.

Die Aufgabe ist bei einer gattungsgemässen Vorrichtung durch eine Blechführung mit wenigstens einem Tisch gelöst, der die Blechtafel zwischen einer oberen und einer unteren Platte horizontal verschieblich führt und der zwischen den Platten schalldämmende und die Blechtafel klemmende Mittel aufweist. Mit der Blechführung wird die Blechtafel vergleichsweise grossflächig gefasst und damit stabilisiert. Gleichzeitig wirkt die sandwichartig aufgebaute Blechführung schalldämmend. Damit ist ein genauerer und präziserer Schnitt bei gleichzeitig kleinerer Geräuschbildung erreichbar.

Die klemmenden und gleichzeitig schalldämmenden Mittel können besonders kostengünstig und wirksam durch Borsten realisiert werden, die vorzugsweise an der Unterseite einer oberen Platte und an der Oberseite einer unteren Platte angebracht sind. Zwischen zwei Borstenplatten ist die Blechtafel stufenlos und präzise geführt horizontal verschieblich.

Die Stabilisierung ist dann besonders wirksam, wenn die Blechführung gemäss einer Weiterbildung der Erfindung zwei im Abstand zueinander angeordnete Tische aufweist. Der Schnitt der Blechtafel erfolgt dann zwischen diesen beiden Tischen.

Ist gemäss einer Weiterbildung am Schlitten wenigstens eine Zahnstange befestigt und der genannte erste Antrieb mit dieser Zahnstange in Eingriff, um den Schlitten horizontal hin- und herzubewegen, so wird zusätzlich auch der Schlitten wesentlich stabilisiert. Diese Stabilisierung kann noch weiter verbessert werden, indem gemäss einer Weiterbildung der Erfindung der Schlitten auf zwei parallelen und im Abstand zueinander angeordneten Schienen geführt ist. Mit der Stabilisierung der Blechtafel mit der genannten Blechführung und der Stabilisierung des Schlittens mit wenigstens einer Zahnstange sowie Schienen, kann ein besonders präziser Schnitt erreicht werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 schematisch eine räumliche Ansicht einer erfindungsgemässen Vorrichtung, wobei aus zeichnerischen Gründen Teile des Gestells weggelassen sind, und
Figur 2 einen Schnitt entlang der Linie II-II der Figur 1.

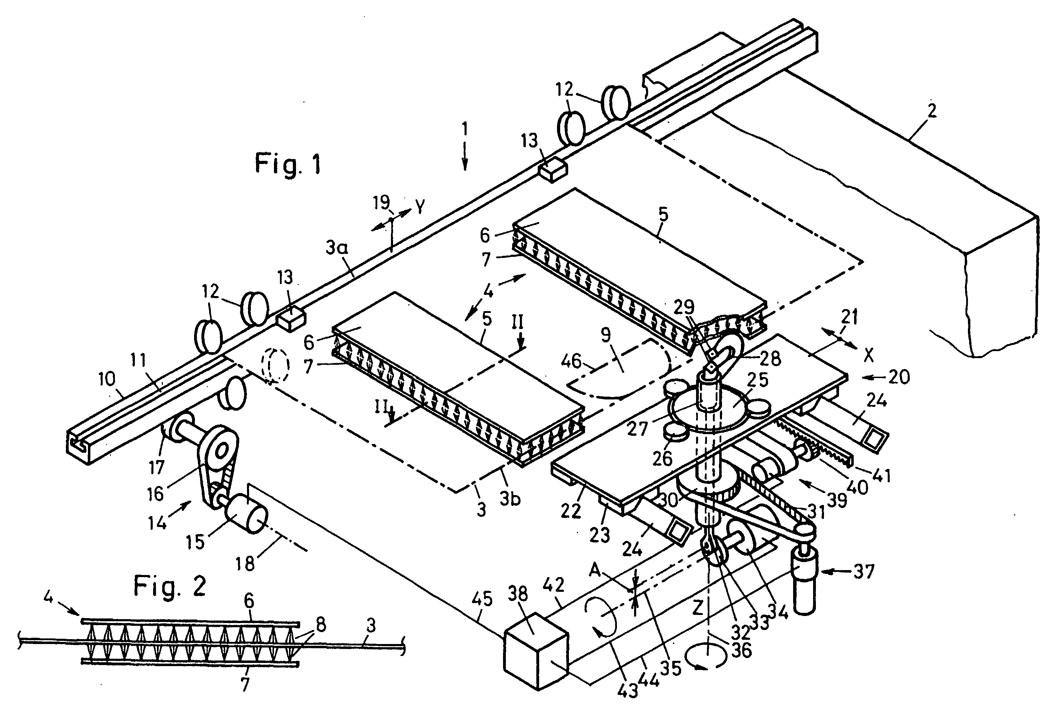

Die in Figur 1 gezeigte Vorrichtung 1 zum rechnergesteuerten Formschneiden weist ein hier nur angedeutetes übliches Maschinengestell 2 auf. An diesem ist mit beispielsweise acht Führungsrollen 12 eine Transportschiene 10 in Richtung des Doppelpfeils 19 hin- und herbeweglich geführt. Diese Richtung bildet im Koordinatensystem der Vorrichtung 1 die Y-Richtung. Die Transportschiene 10 dient zur horizontalen Bewegung einer Blechplatte 3, aus der beispielsweise entlang der gedachten Linie 46 ein Werkstück 9 herausgeschnitten werden soll. Das Blech 3 ist vorzugsweise ein Dünnblech mit einer hinteren Kante 3a und einer vorderen Kante 3b. Die Blechtafel 3 ist mit zwei im Abstand angeordneten Magneten 13 an der Transportschiene 10 fixiert. Zur Ausrichtung der Blechtafel 3 an der Transportschiene 10 ist in diese eine Längsnut 11 eingearbeitet. Anstelle der beiden Magnete 13 sind auch andere Klemmmittel zur Befestigung möglich.

Die Transportschiene 10 wird mit einem Servoantrieb 14 bewegt, der über eine Leitung 45 mit einem Rechner 38 verbunden ist und von diesem gesteuert wird. Der Antrieb 14 besitzt einen Motor 15 mit der Drehachse 18 und ist über einen Zahnriemen 16 mit einer Gummireibrolle 17 verbunden. Diese Reibrolle 17 ist reibschlüssig mit der Transportschiene 10 in Eingriff. Je nach Drehrichtung der Gummireibrolle 17 wird die Transportschiene 10 in Figur 1 in Y-Richtung nach rechts oder links bewegt. Hierbei wird die Blechtafel 3 mitgenommen.

Die Blechtafel 3 ist in einer Blechführung 4 geführt, die zwei im Abstand zueinander angeordnete und horizontal ausgerichtete Borstentische 5 aufweist. Diese beiden Borstentische 5 sind in hier nicht gezeigter Weise mit dem Maschinengestell 2 fest verbunden. Die vergleichsweise grossflächigen Borstentische 5 besitzen jeweils eine obere Borstenplatte 6 und eine untere Borstenplatte 7. Bei der oberen Borstenplatte 6 sind unterseitig eine Mehrzahl nach unten gerichtete Borsten 8 und an der unteren Platte 7 eine Mehrzahl nach oben gerichtete Borsten 8 befestigt. Wie die Figur 2 zeigt, wird zwischen den beiden Platten 6 und 7 die Blechtafel 3 durch die Borsten 8 geklemmt. Die Klemmkraft ist so eingerichtet, dass die Blechtafel 3 durch den Antrieb 14 noch ohne weiteres in beiden Richtungen des Doppelpfeils 19 bewegbar ist. Die beiden Borstenplatten 6 und 7 sind selbstverständlich so am Gestell 2 befestigt, dass sie bei einer Bewegung der Blechtafel 3 nicht bewegt werden. Wie ersichtlich, sind vorzugsweise zwei im Abstand zueinander angeordnete Borstentische 5 vorgesehen. Diese sind so angeordnet, dass mittels einer Schneidvorrichtung 20 die Blechtafel 3 in einem Zwischenraum zwischen diesen beiden Borstentischen 5 geschnitten werden kann.

Die Schneidvorrichtung 20 weist einen tischähnlichen Schlitten 22 auf, der auf zwei im Abstand zueinander angeordneten, parallelen Führunsschienen 24 horizontal verschieblich gelagert ist. Der Schlitten 22 weist unterseitig Führungsmittel 23 auf, die auf den Führungsschienen 24 verschieblich aufliegen. Der Schlitten 22 ist in den Richtungen des Doppelpfeils 21 verschiebbar. Diese Richtung bildet im Koordinatensystem der Vorrichtung 1 die X-Achse. Die Bewegung des Schlittens 22 erfolgt horizontal und rechtwinklig zur Achse 19. Zur Bewegung des Schlittens 22 ist an diesem unterseitig eine horizontal verlaufende Zahnstange 41 befestigt, die mit einem Ritzel 40 eines Antriebs 39 in Eingriff ist. Der Antrieb 39 weist ebenfalls einen Servomotor auf, der über eine Leitung 42 mit dem Rechner 38 verbunden und von diesem gesteuert ist. Durch Drehen des Ritzels 40 wird somit der Schlitten 22 in der einen oder anderen Richtung des Doppelpfeils 21 verschoben. Auf dem Schlitten 22 ist etwa mittig mit drei Führungsrollen 26 ein Drehteller 25 gelagert.

Dieser Teller 25 ist mit einer mittig angeordneten Hohlwelle 27 verbunden, an der unterhalb des Schlittens 22 ein Ritzel 30 befestigt ist. Am oberen Ende der Hohlwelle 27 ist ein Schneidmesserkopf 28 befestigt. Durch Drehen der Hohlwelle 27 wird der Schneidmesserkopf 28 radial ausgerichtet. Am Schneidmesserkopf 28 sind zwei einander gegenüber angeordnete Schneidmesser 29 befestigt. Zum Drehen der Hohlwelle 27 ist ein Servoantrieb 37 vorgesehen, der über einen Zahnriemen 31 mit dem Ritzel 30 in Eingriff ist. Der Antrieb 37 ist ebenfalls über eine Leitung 44 vom Rechner 38 gesteuert. Die Hohlwelle 27 ist in beiden Drehrichtungen um die vertikale Achse 36 drehbar. Der Drehwinkel ist unbeschränkt.

Das untere der beiden Schneidmesser 29 führt zum Schneiden der Blechtafel 3 einen regelbaren und vertikalen Schneidhub aus. Zur Ausübung dieses Hubes ist das untere der beiden Schneidmesser 29 mit einer Kurbel 32 verbunden, die an ihrem unteren Ende gelenkig an einer Exzenterscheibe 33 befestigt ist. Diese Scheibe 33 wird von einem Antrieb 34 angetrieben und ist um die Achse 35 drehbar. Die Hubzahl beträgt beispielsweise 4500 U/Min. und ist wie erwähnt regelbar. Die Regelung erfolgt über den Rechner 38, der mit einer Leitung 44 mit dem Antrieb 34 verbunden ist.

Zum Schneiden der Blechtafel 3 wird der Schlitten 22 in X-Richtung bewegt, bis die Schneidmesser 29 den vorderen Rand 3b der Blechtafel 3 erreicht haben. Der Schneidvorgang entlang der Linie 46 erfolgt durch koordinierte Bewegungen. Beim Schneidvorgang wird die Blechtafel 3 in Y-Richtung und der Schlitten 22 in X-Richtung bewegt. Gleichzeitig wird der Hub des unteren der beiden Schneidmesser 29 ausgeführt und der Schneidmesserkopf 28 laufend ausgerichtet. Diese Bewegungen werden vom Rechner 38 gesteuert, der in einem Speicher abrufbar die verschiedensten Formen zum Ausschneiden eines Werkstückes 9 besitzt. Geeignete Rechner 38 und entsprechende Steuerprogramme sind dem Fachmann bekannt und brauchen hier nicht näher erläutert zu werden.

## Patentansprüche

1. Vorrichtung zum rechnergesteuerten Formschneiden von Blechen (3), mit einem Maschinengestell (2), an dem ein Schneidwerkzeug (20) mit einem um eine vertikale Achse (36) schwenkbaren Schneidmesserkopf (28), mit Zumindest einem Schneidmesser (29), in einer horizontalen Richtung (21) mit einem ersten Antrieb (39) verfahrbar ist und mit einer Blechtransporteinrichtung (10), die einen zweiten Antrieb (14) und Führungsmittel (12) aufweist, mit denen eine Blechtafel (3) in horizontaler Richtung (19) gesteuert verfahrbar ist, **gekennzeichnet durch** eine Blechführung (4) mit wenigstens einem Tisch (5), der die Blechtafel (3) zwischen einer oberen und einer unteren Platte (6, 7) horizontal verschieblich führt und der zwischen den genannten beiden Platten (6, 7) schalldämmende und die Blechtafel (3) klemmende Mittel (8) aufweist.

2. Vorrichtung nach Anspruch 1, **dadurch gekennzeichnet, dass** der Tisch (5) ein Borstentisch ist.

3. Vorrichtung nach Anspruch 2, **dadurch gekennzeichnet, dass** die beiden Platten (6, 7) Borstenplatten sind.

4. Vorrichtung nach Anspruch 3, **dadurch gekennzeichnet, dass** die obere Platte (6) an ihrer Unterseite und die untere Platte (7) an ihrer Oberseite Borsten (8) aufweisen.

5. Vorrichtung nach einem der Ansprüche 1 bis 4, **dadurch gekennzeichnet, dass** zwei im Abstand zueinander angeordnete Tische (5) vorgesehen sind.

6. Vorrichtung nach einem Ansprüche 1 bis 5, **dadurch gekennzeichnet, dass** das Schneidwerkzeug (20) auf einem horizontal verfahrbaren Schlitten (22) gelagert ist.

7. Vorrichtung nach Anspruch 6, **dadurch gekennzeichnet, dass** der Schlitten (22) auf zwei parallelen und im Abstand zueinander angeordneten Schienen (24) geführt ist.

8. Vorrichtung nach Anspruch 6 oder 7, **dadurch gekennzeichnet, dass** am Schlitten (22) vorzugsweise unterseitig wenigstens eine Zahnstange (41) befestigt ist und dass der genannte erste Antrieb (39) mit dieser Zahnstange (41) in Eingriff ist, um den Schlitten (22) horizontal hin- und herzubewegen.

9. Vorrichtung nach einem der Ansprüche 1 bis 8, **dadurch gekennzeichnet, dass** zur Ausübung eines vertikalen Schneidhubes am Schneidmesser (29) ein regelbarer Antrieb (34) vorgesehen ist.

10. Vorrichtung nach Anspruch 9, **dadurch gekennzeichnet, dass** der regelbare Antrieb für das Schneidmesser (29) eine Kurbel (32) aufweist, die einen vertikalen Hub (A) ausführt, der auf das Schneidmesser (29) übertragen wird.

## Claims

1. Apparatus for computer operated cutting of sheets (3), having a machine frame (2), on which a cutting tool (20), which has a cutting-blade head (28), with at least one cutting blade (29), which can pivot about a vertical axis (36), can be displaced in a horizontal direction (21) by a first drive (39), and having a sheet-conveying device (10), which has a second drive (14) and guide means (12), by which a sheet plate (3) can be displaced in a controlled manner in the horizontal direction (19), **characterized by** a sheet guide (4) having at least one table (5), which guides the sheet plate (3) in a horizontally displaceable manner between an upper and a lower panel (6, 7) and which has sound-insulating means (8), which clamp the sheet plate (3), between the said two panels (6, 7).

2. Apparatus according to Claim 1, **characterized in that** the table (5) is a bristle table.

3. Apparatus according to Claim 2, **characterized in that** the two panels (6, 7) are bristle panels.

4. Apparatus according to Claim 3, **characterized in that** the upper panel (6) has bristles (8) on its underside and the lower panel (7) has bristles (8) on its upper side.

5. Apparatus according to one of Claims 1 to 4, **characterized in that** there are two tables (5) arranged at a distance from one another.

6. Apparatus according to one of Claims 1 to 5, **characterized in that** the cutting tool (20) is mounted on a horizontally displaceable carriage (22).

7. Apparatus according to Claim 6, **characterized in that** the carriage (22) is guided on two parallel rails (24) which are arranged at a distance from one another.

8. Apparatus according to Claim 6 or 7, **characterized in that** at least one rack (41), is secured to the carriage (22), preferably on the underside, and **in that** the said first drive (39) meshes with this rack (41) in order to move the carriage (22) to and fro in the horizontal direction.

9. Apparatus according to one of Claims 1 to 8, **characterized in that** a controllable drive (34) is provided on the cutting blade (29) in order to execute a vertical cutting stroke.

10. Apparatus according to Claim 9, **characterized in that** the controllable drive for the cutting blade (29) has a crank (32) which executes a vertical stroke (A) which is transmitted to the cutting blade (29).

## Revendications

1. Dispositif pour couper des tôles (3) par commande par ordinateur, comprenant un bâti de machine (2), sur lequel un outil de coupe (20) avec une tête de lame de coupe (28) pivotant autour d'un axe vertical (36), avec au moins une lame de coupe (29), est déplaçable dans une direction horizontale (21) avec une première commande (39) et avec un dispositif de transport de tôles (10), qui présente une deuxième commande (14) et des moyens de guidage (12) avec lesquels une tôle (3) peut être déplacée de manière contrôlée dans la direction horizontale (19), **caractérisé par** un guidage de tôle (4) avec au moins une table (5), qui guide de manière déplaçable horizontalement la tôle (3) entre une plaque supérieure et une plaque inférieure (6, 7), et qui présente entre lesdites deux plaques (6, 7) des moyens (8) amortisseurs du son et serrant les tôles (3).

2. Dispositif selon la revendication 1, **caractérisé en ce que** la table (5) est une table à brosses.

3. Dispositif selon la revendication 2, **caractérisé en ce que** les deux plaques (6, 7) sont des plaques à brosses.

4. Dispositif selon la revendication 3, **caractérisé en ce que** la plaque supérieure (6) présente des brosses (8) sur sa face inférieure et la plaque inférieure (7) présente des brosses (8) sur sa face supérieure.

5. Dispositif selon l'une quelconque des revendications 1 à 4, **caractérisé en ce qu'**il est prévu deux tables (5) espacées l'une de l'autre.

6. Dispositif selon l'une quelconque des revendications 1 à 5, **caractérisé en ce que** l'outil de coupe (20) est monté sur un chariot (22) déplaçable horizontalement.

7. Dispositif selon la revendication 6, **caractérisé en ce que** le chariot (22) est guidé sur deux rails (24) parallèles et espacés l'un de l'autre.

8. Dispositif selon la revendication 6 ou 7, **caractérisé en ce qu'**au moins une crémaillère (41) est fixée de préférence sur la partie inférieure du chariot (22), et **en ce que** ladite première commande (39) est en prise avec cette crémaillère (41), pour faire avancer et reculer horizontalement le chariot (22).

9. Dispositif selon l'une quelconque des revendications 1 à 8, **caractérisé en ce qu'**il est prévu une commande réglable (34) pour exercer une poussée de coupe verticale sur la lame de coupe (29).

10. Dispositif selon la revendication 9, **caractérisé en ce que** la commande réglable pour la lame de coupe (29) présente une manivelle (32) qui réalise une poussée verticale (A), qui est transmise à la lame de coupe (29).
